# EUROPEAN PATENT APPLICATION

(11) **EP 2 154 527 A1**
(43) Date of publication of application: **17.02.2010**
(21) Application number: 08162451.2
(22) Date of filing: 15.08.2008
(51) Int. Cl.: G01N 29/04, G01N 29/44, G01N 17/00

(54) **A method and an apparatus for non-destructively investigating an aging property of an object**

(71) Applicant: Nederlandse Organisatie voor Toegepast- Natuurwetenschappelijk Onderzoek TNO, 2628 VK Delft (NL)
(72) Inventor: Volker, Arno Willem Frederik, 2622 KN Delft (NL)
(74) Representative: Hatzmann, Martin

(57) **Abstract**

The invention relates to a method for non-destructively investigating an aging property of an object, comprising the steps of subjecting the object to a first beam of ultrasonic radiation, detecting a second beam of ultrasonic radiation emanating from the object, determining at least one parameter of the second beam of ultrasonic radiation, determining the aging property from comparison of the at least one parameter of the second beam of ultrasonic radiation with a reference value. The invention further relates to an apparatus for enabling the same.

## Description

### FIELD OF THE INVENTION

The invention relates to a method for non-destructively investigating an aging property of an object using a beam of ultrasonic radiation. The invention further relates to an apparatus for non-destructively investigating an aging property of an object using a beam of ultrasonic radiation.

### BACKGROUND OF THE INVENTION

Investigation of aging properties of an object finds its application in various fields of technology. For example, US 4, 676, 379 discloses an apparatus for discriminating and sorting out defective bottle crates from sound bottle crates. The known apparatus comprises driving means for urging an intender or contact tip provided at the tip of a vibrating rod of an ultrasonic hardness tester into steady contact in indented state with a bottle crate, detecting means for detecting resonant frequency of said vibrating rod which is varied by the urging of said indenter or contact tip into steady contact with said bottle crate, and means for distinguishing and sorting out defective bottle crates from sound bottle crates in response to the resonant frequency detected by the detecting means. As a result, bottle crates which have decreased strength, for example, due to aging of a crate material, are sorted out.

It is a disadvantage of the known apparatus that the indenter or contact tip are conceived to at least partially penetrate into the material of the bottle crate. However, some specific objects, like certain underground pipes may not be damaged during determination of their age for preventing accidents. Therefore, it is desirable to provide a method for a non-destructive investigation of object's aging.

### SUMMARY OF THE INVENTION

It is an object of the invention to provide a method for non-destructively investigating an aging property of an object, which is reliable and simple to implement.

To this end, the method according to the invention comprises the steps of:
- subjecting the object to a first beam of ultrasonic radiation;
- detecting a second beam of ultrasonic radiation emanating from the object;
- determining at least one parameter of the second beam of ultrasonic radiation;
- determining the aging property from comparison of the at least one parameter of the second beam of ultrasonic radiation with a reference value.

The invention is based on the insight that it is feasible to determine a degree of inbrittlement of plastic objects using an ultrasonic beam. The degree of inbrittlement is found to be directly proportional to age of the object. The method according to the invention, while applicable to different classes of materials, is found to be particularly useful for studying aging of polycarbonate and polyvinylchloride. In particular, it is found that an amplitude of an ultrasonic beam emanating from the object is attenuated to a lesser extend for increased age of the object. Therefore, a decrease in attenuation of the amplitude may be selected as a suitable parameter based on which age can be determined.

This phenomenon may be explained as follows. Aging of a plastic material takes place at all ambient temperatures below a glass temperature characteristic of the plastic material, wherein at temperatures tending to the glass temperature aging accelerates. Such aging may be accompanied by an increase in mobility of polymer molecules in the plastic material, whereby, due to Van Der Waals forces, chains of polymer molecules approach each other leading to an increase in density of the plastic material. Therefore, density of an aged plastic material will be higher than density of a "young" plastic material having the same chemical nature. Therefore, attenuation of an ultrasonic signal through a denser material will be lower. By measuring a relative or an absolute amplitude damping of an ultrasonic wave when propagating through a material to be studied, for example plastic, aging thereof may be determined.

It will be appreciated that the method according to the invention may be practiced using transmitted ultrasonic beams, or reflected ultrasonic beams. In the latter case the ultrasonic beam has travelled twice the thickness of the investigated material. Thus, pulse-echo techniques may be useful to further increase accuracy of aging determination, as for relatively thin objects, like pipes, it may be insufficient to use transmission measurement for accurately discriminating between various ages.

Next, it is found that specificity of the analysis, i.e. a substantially fine age discrimination may be achieved for higher frequencies of the first beam of ultrasonic radiation. Therefore, the frequency of the first beam of ultrasonic radiation is selected in a range of 20 - 40 MHz, preferably in a range of 25 - 35 MHz, more preferably is set to a value of about 30 MHz.

It is further found that an improved sensitivity of the method according to the invention may be increased for a measuring set-up in which the first beam is transversely propagating with respect to a surface of the object. Preferably, the first beam is propagating substantially perpendicular to a surface of the object under investigation.

In an embodiment of the method according to the invention the first beam of ultrasonic radiation comprises a plurality of overlapping sub-beams.

It is found to be advantageous to use overlapping beams, in particular for investigating aging of objects having circumference, like tubes, spheres, or the like. For example, for an area of a transducer material of 4 mm² and an inner diameter of a tube of 1.35 mm there should be taken about 670 measurements along a perimeter of the tube for covering the whole circumference. By allowing the first beam of ultrasonic radiation to be composed of a suitable number of overlapping sub-beams and/or by increasing an overlap between the first beam and the surface of the object measurement time may be increased.

In addition, in case the transducer is conceived to be rotated about a tubular object, measurement speed is determined by a displacement velocity of the transducer with respect to the object. Preferably, a wide band transducer is selected due to the fact that it has an increased resolution along a beam axis.

In an embodiment of the method according to the invention a degree of overlap between the first beam and the object and/or between said sub-beams is variable.

This feature has an advantage that measurement speed is increased in case a plurality of objects is to be investigated, for example a plurality of tubular objects having different cross-sections. By increasing an overlap between the first beam, as such, or composed of a number of sub-beams and a surface of the tubular object, measurement time may be decreased. Preferably, such overlap is enabled used a regulator cooperating with a source or with the sources to increase a cross-section of the ultrasonic beam impinging on a surface of the object.

An apparatus according to the invention comprises:
- at least one source of ultrasonic radiation for impinging a first beam of ultrasonic radiation on the object;
- a detector for detecting a second beam of ultrasonic radiation emanating from the object;
- a processor for:
   i. determining at least one parameter of the second beam of ultrasonic radiation;
   ii. determining the aging property from comparison of the at least one parameter of the second beam of ultrasonic radiation with a reference value.

In an embodiment of the apparatus according to the invention, the apparatus comprises at least two sources of ultrasonic radiation for generating overlapping sub-beams.

In a further embodiment of the apparatus according to the invention, the apparatus comprises a regulator for adjusting a degree of overlap between said first beam and a surface of the object.

In accordance with this feature a measurement time necessary to investigate aging of the object may be decreased by increasing a surface area of the first beam of ultrasonic radiation impinging on the object.

In a still further embodiment of the apparatus according to the invention, the apparatus further comprises a computer program arranged to be run on the processor for determining at least one parameter of the second beam of ultrasonic radiation and for determining the aging property based on said parameter.

For example, the computer program may be arranged, for a given amplitude of the first beam, to determine an amplitude of the second beam and subsequently to determine aging of the object from comparison of said amplitude with a reference value. An example of a reference value may be amplitude measured for a new object, or amplitude measured during a latest age determination step, for example during maintenance.

Alternatively, the computer program may be arranged to determine a damping factor by dividing the amplitude of the second beam by the amplitude of the first beam. In this case in order to determine aging of the object the computer program may address a table or another suitable source of data relating damping with aging. Preferably, such table or data is compiled for each type of material to be investigated.

These and other aspects of the invention will be discussed in further detail with reference to drawings wherein like reference signs represent like elements. It will be appreciated that the drawing are presented for illustrative purposes only and may not be used for limiting the scope of the appended claims.

### BRIEF DESCRIPTION OF THE DRAWINGS

Figure 1 presents a schematic view of an embodiment of an apparatus according to the invention.
Figure 2 presents a further schematic view of an embodiment of the apparatus shown in Figure 1.
Figure 3 presents in a schematic way an embodiment of measurement data obtainable with the apparatus according to the invention.

### DETAILED DESCRIPTION OF THE DRAWINGS

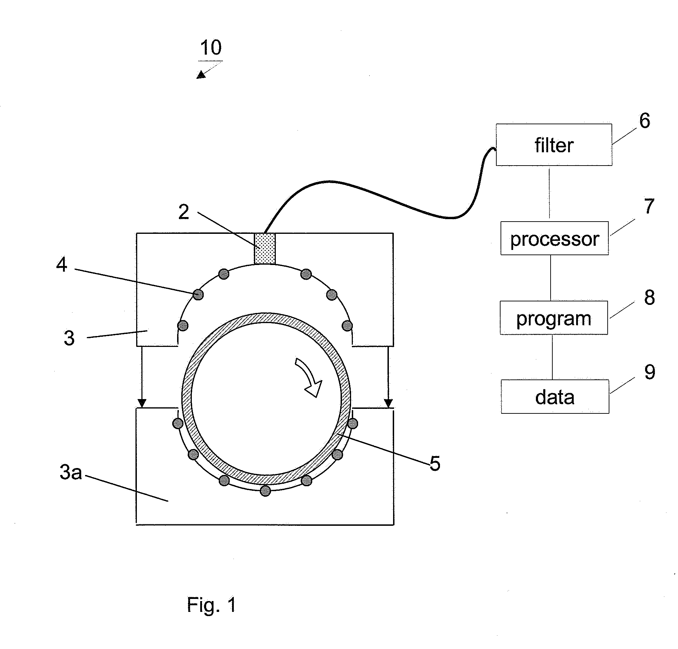

Figure 1 presents a schematic view of an embodiment of an apparatus 10 according to the invention. In this particular embodiment the apparatus 10 is arranged to investigate aging properties of tubular objects, for example, of plastic pipes. For this reason the apparatus 10 comprises two holder portions 3, 3a, which are displaceable with respect to each other. The holder portions 3, 3a comprise an opening where through a suitable tubular object 5 may be inserted. The apparatus 10 further comprises a source 2 of ultrasonic radiation, which may be operable in a dual mode, that is to emit a first beam of ultrasonic radiation and to detect a second beam of ultrasonic radiation emanating from the object 5. It will be appreciated that in the depicted geometry the second beam relates to reflected ultrasonic beam. Alternatively or additionally, the holder portions 3, 3a may comprise a further detector (not shown) arranged in a radial displacement with respect to the source 2 for detecting an ultrasonic beam transmitted through the tubular object 5. In order to enable a displacement between a surface of the tubular object 5 and the source/detector 2, the holder portions 3, 3a may be provided with a bearing 4 for rotating the tubular object 5 about its longitudinal axis (not shown).

Data collected by a detector may be subjected to a suitable filtering and/or amplification in a filter unit 6, after which it may be suitably processed by a processor 7. Preferably, the processor 7 is arranged to run a computer program 8 arranged for determining at least one parameter of the second beam of ultrasonic radiation and for determining the aging property of the object based on said parameter. For this purpose, the program 8 may be provided with one or more computational algorithms for determining the amplitude damping of the first beam based on the measured amplitude of the detected second beam. Suitable calculus for enabling such computations is readily available for those skilled in the art. When the amplitude of the second beam is determined, the computer program may use reference data 9 for determining an age of the tubular object under investigation. The reference data 9 may relate to tabulations of expected amplitude damping per material and/or expected amplitude damping for reference objects having substantially the same geometry as an object under consideration. For example, the reference data 9 may comprise amplitude damping data for different plastic tubes manufactured from different materials, having known age.

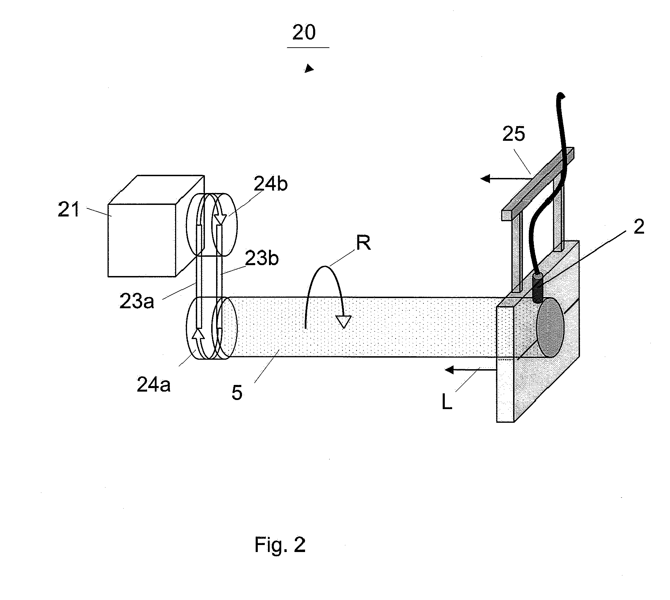

Figure 2 presents a further schematic view of an embodiment 20 of the apparatus shown in Figure 1, wherein instead of the bearing shown in Figure 1 a stepper motor 21 having a projection 24b cooperating with a band 23a, 23b is used for rotating an outer portion 24a of the tubular object 5 about its longitudinal axis, for example in a direction R. In order to enable a scanning of more than one cross-section of the tubular object 5 by the ultrasonic beam emanating from the source 2, a frame 25, supporting the source 2 may be displaceable with respect to the object 5, as is schematically indicated by arrow L.

It will be appreciated that the apparatus 20 may enable a continuous scanning of the object 5, or an iterative scanning of the object 5 for specific dwell positions of the frame 25.

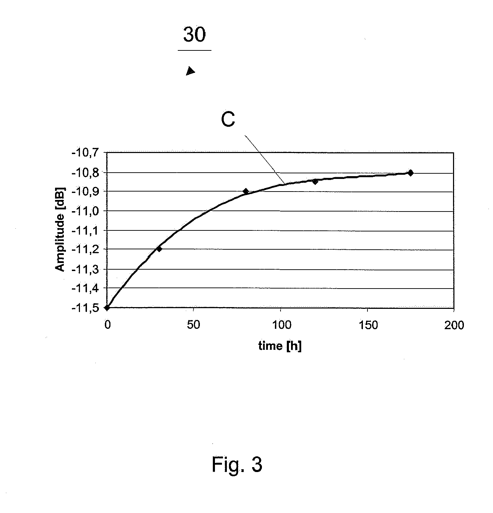

Figure 3 presents in a schematic way an embodiment of a graph 30 based on measurement data obtainable with the apparatus according to the invention. It is seen that an amplitude damping C may be used for reliably and accurately measuring an age of an object using an ultrasonic beam. In particular, initial aging is well correlated with amplitude damping set-out on the ordinate axis.

It will be appreciated that while specific embodiments of the invention have been described above, that the invention may be practiced otherwise than as described. In addition, isolated features discussed with reference to different embodiments may be combined.

## Claims

1. A method for non-destructively investigating an aging property of an object, comprising the steps of:
- subjecting the object to a first beam of ultrasonic radiation;
- detecting a second beam of ultrasonic radiation emanating from the object;
- determining at least one parameter of the second beam of ultrasonic radiation;
- determining the aging property from comparison of the at least one parameter of the second beam of ultrasonic radiation with a reference value.

2. A method according to claim 1, wherein for the parameter an amplitude of the second beam is selected.

3. A method according to claim 1 or 2, wherein the first beam of ultrasonic radiation comprises a plurality of overlapping sub-beams.

4. A method according to claim 1, 2 or 3, wherein a degree of overlap between the first beam and a surface of the object is variable.

5. A method according to any one of the preceding claims, wherein the object comprises a plastic tube, preferably an underground plastic tube.

6. A method according to any one of the preceding claims, wherein the first beam is transversely propagating with respect to a surface of the object.

7. A method according to any one of the preceding claims, wherein a frequency of the first beam of ultrasonic radiation is selected in a range of 20 - 40 MHz, preferably in a range of 25 - 35 MHz, more preferably is set to a value of about 30 MHz.

8. A method according to any one of the preceding claims, wherein the second beam is a reflected or a transmitted beam of ultrasonic radiation.

9. An apparatus for non-destructively investigating an aging property of an object, comprising:
- at least one source of ultrasonic radiation for impinging a first beam of ultrasonic radiation on the object;
- a detector for detecting a second beam of ultrasonic radiation emanating from the object;
- a processor for:
i. determining at least one parameter of the second beam of ultrasonic radiation;
ii. determining the aging property from comparison of the at least one parameter of the second beam of ultrasonic radiation with a reference value.

10. An apparatus according to claim 9, comprising at least two sources of ultrasonic radiation for generating overlapping sub-beams.

11. An apparatus according to claim 9 or 10, further comprising a regulator for adjusting a degree of overlap between said first beam and a surface of the object.

12. An apparatus according to any one of the preceding claim 9 - 11, wherein a source of ultrasonic radiation comprises a wide band transducer.

13. An apparatus according to any one of the preceding claim 9 - 12, further comprising a computer program arranged to be run on the processor for determining at least one parameter of the second beam of ultrasonic radiation and for determining the aging property based on said parameter.
